# EUROPÄISCHE PATENTANMELDUNG

(11) **EP 0 978 427 A1**
(43) Veröffentlichungstag der Anmeldung: **09.02.2000**
(21) Anmeldenummer: 99115419.6
(22) Anmeldetag: 04.08.1999
(51) Int. Cl.: B60R 22/41

(54) **Sicherheitsgurtvorrichtung mit Beschleunigungssensor**

(30) Priorität: 06.08.1998 DE 19835673
(71) Anmelder: TAKATA (EUROPE) VEHICLE SAFETY TECHNOLOGY GmbH, 89081 Ulm (DE)
(72) Erfinder: Kopetzky, Robert, Dr., 89173 Lonsee (DE)
(74) Vertreter: Manitz, Finsterwald & Partner

(57) **Zusammenfassung**

Die Erfindung betrifft eine Sicherheitsgurtvorrichtung mit einer vorzugsweise durch eine Feder in Aufwickelrichtung vorgespannten Gurtolle (11), auf die ein Anschnallgurt (12) mehr oder weniger weit aufgewickelt ist, wobei ein Beschleunigungssensor (13) mit beweglicher Masse (19) und von dieser beaufschlagter Hilfs-Sperrklinke (15) ein Einsteuerzahnrad (14) mit der Hilfs-Sperrklinke (15) ansteuert, welches seinerseits über ein Getriebe (16) auf eine mit der Gurtrolle (11) drehfest verbundene Haupt-Sperrklinke (17) einwirkt, damit diese beim Sperren des Einsteuerzahnrades (14) durch die Hilfs-Sperrklinke (15) in einen Haupt-Sperrzahnkranz (18) eingreift, um den weiteren Auszug des Gurtes (12) zu stoppen. Hierbei sieht die Erfindung vor, daß die Hilfs-Sperrklinke (15) an einem Federelement (20) ausgebildet ist, welches beim Hin- und Herbewegen der Masse (19) die gegen das Einsteuerzahnrad gerichteten Schlagbewegungen derart dämpft, daß die hierbei auftretenden Klappergeräusche auf ein weitgehend störungsfreies Maß gedämpft werden.

## Beschreibung

Die Erfindung betrifft eine Sicherheitsgurtvorrichtung mit Beschleunigungssensor nach dem Oberbegriff des Patentanspruchs 1.

Eine derartige Sicherheitsgurtvorrichtung ist beispielsweise aus der GB 2 131 279 bekannt. Ihr Prinzip beruht darauf, daß ein mit einer Kugel als bewegliche Masse ausgestatteter Beschleunigungssensor eine um eine Querachse verschwenkbare Sperrklinke aufweist, die bei Horizontalbewegungen der Kugel infolge von Beschleunigungen oder Verzögerungen in einen Zahn am Umfang eines Einsteuerzahnrades eingreift, wodurch das Einsteuerzahnrad, welches über ein Getriebe drehfest mit der Gurtrolle verbunden ist, schlagartig abgebremst wird. Da der Gurt weiter ausgezogen wird, erfolgt über das zwischen dem Einsteuerzahnrad und der Haupt-Sperrklinke vorgesehene Getriebe ein Ausfahren der Haupt-Sperrklinke, damit diese in den Haupt-Sperrzahnkranz eingreift und so die Ausziehbewegung des Gurtes abstoppt.

Ein Problem bei derartig arbeitenden Beschleunigungssensoren besteht darin, daß die bewegliche Masse aufgrund der Erschütterungen beim normalen Fahren in dem sie umgebenden Freiraum sich hin- und herbewegt, wobei auch die Hilfs-Sperrklinke ständig hin- und hergeschwenkt wird. Dabei schlägt sie immer wieder an den Außenumfang des Einsteuerzahnrades an, was zu unangenehmen Klappergeräuschen führt.

Das Ziel der Erfindung besteht darin, eine Sicherheitsgurtvorrichtung der eingangs genannten Gattung zu schaffen, bei der Klappergeräusche des Beschleunigungssensors und der mit ihm verbundenen Teile während des normalen Fahrens weitgehend unterbunden werden.

Zur Lösung dieser Aufgabe sind die Merkmale des kennzeichnenden Teils des Anspruches 1 vorgesehen.

Der Erfindungsgedanke ist also darin zu sehen, die Sperrklinke an einem Federelement vorzusehen, welches die beim Anschlagen an das Einsteuerzahnrad auftretenden Stöße so weit dämpft, daß die Klappergeräusch-Entwicklung zumindest stark reduziert wird.

Vorteilhafte Weiterbildungen sind durch die Unteransprüche gekennzeichnet. Besondere Bedeutung kommt dabei den Wegbegrenzungsmitteln zwischen den Schenkeln zu. Konkrete Beispiele entnimmt man den Ansprüchen 6 bis 10.

Die Erfindung wird im folgenden beispielsweise anhand der Zeichnung beschrieben; in dieser zeigt:

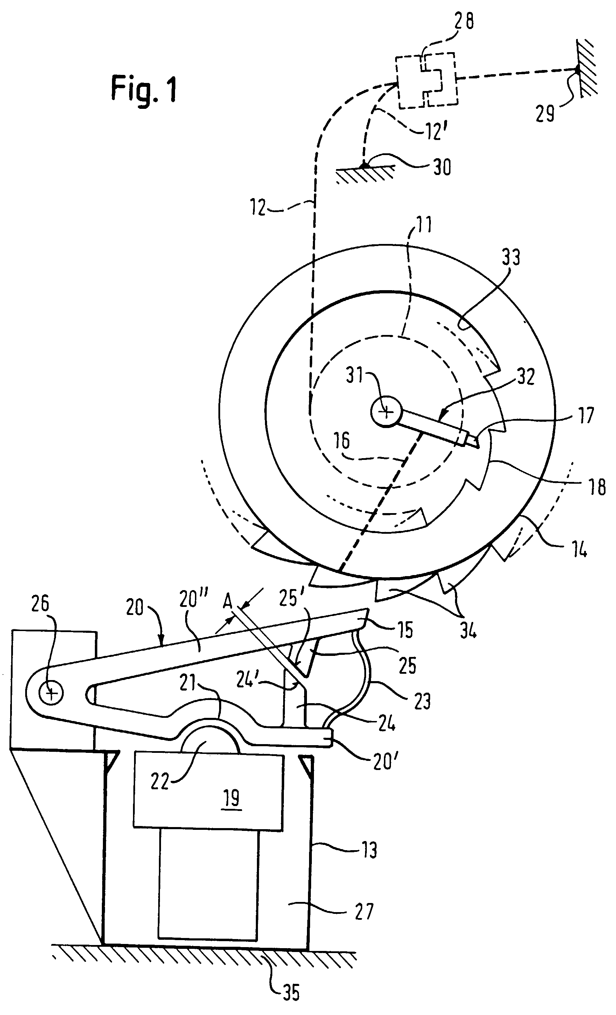

- Figur 1: eine schematische Seitenansicht einer vorteilhaften Ausführungsform einer erfindungsgemäßen Sicherheitsgurtvorrichtung, wobei der Beschleunigungssensor mit den mit ihm zusammenarbeitenden Bauteilen stark vergrößert wiedergegeben ist.

Nach Figur 1 weist eine erfindungsgemäße Sicherheitsgurtvorrichtung einen auf eine Gurtrolle 11 mehr oder weniger aufgewickelten Anschnallgurt 12 auf, der über ein Gurtschloß 28 zu einer Befestigungsstelle 29 am Fahrzeugchassis führt. Vom Gurtschloß 28 erstreckt sich ein weiterer Gurtteil 12' zu einer weiteren Befestigungsstelle 30 am Fahrzeugchassis. Es handelt sich also um einen üblichen Dreipunktgurt.

Mit der Gurtrolle 11 bzw. deren Welle 31 ist drehfest ein Sperrklinkenmechanismus 32 gekuppelt, der eine ausfahrbare Haupt-Sperrklinke 17 besitzt, die über ein nur gestrichelt angedeutetes Getriebe 16 derart ausfahrbar ist, daß sie in einen Innen-Hauptsperrzahnkranz 18 eingreift, der an Umfang einer Öffnung 33 im im übrigen nicht im einzelnen dargestellten fahrzeugfesten Gehäuse des Gurtaufrollers vorgesehen ist.

Über das Getriebe 16 drehfest mit der Gurtaufrollerwelle 31 gekuppelt ist ein mit dem Haupt-Sperrzahnkranz 18 koaxiales Einsteuerzahnrad 14, das an seinem Außenumfang mit Sperrzähnen 34 versehen ist.

Am nicht im einzelnen dargestellten Gehäuse 35 des Gurtaufrollers ist ein Beschleunigungssensor 13 befestigt, der aus einer in einem Spielraum 17 definiert seitlich bewegbaren Masse 19, die auch als Kugel ausgebildet sein kann, und einer um eine Schwenk-Querachse 26 verschwenkbaren Federelement 20 besteht, das zwei V-förmig zueinander stehende Schenkel 20', 20'' besitzt, wobei die Schwenk-Querachse 26 im Scheitelpunkt des V vorgesehen ist und parallel zur Gurtrollen-Welle 31 verläuft.

Der untere Schenkel 20' ist mit einer unteren, sich nach oben erstreckenden, kugelkalottenartigen Vertiefung 21 versehen, in welche ein entsprechend kugelkalottenförmig geformter oberer Vorsprung 22 der beweglichen Masse 19 eingreift. Der Vorsprung 22 kann auch durch die Kuppe einer Kugel gebildet sein. Bei horizontalen Beschleunigungen und Verzögerungen der beweglichen Masse 19 bzw. Kippungen des Fahrzeugs verschiebt sich der Vorsprung 22 innerhalb der Vertiefung 21 nach der einen oder anderen Seite, wobei der Vorsprung 22 aus der Vertiefung 21 herauszugleiten sucht und dabei das V-förmige Federelement 20 um die Querachse 26 nach oben schwenkt, bis die am vorderen Ende des oberen Schenkels 20'' vorgesehene Hilfs-Sperrklinke 15 zwischen zwei Zähne 34 des Einsteuerzahnrades 14 eingreift. Hierdurch wird eine beim Auszug des Gurtes 12 auftretende Drehbewegung des Einsteuerzahnrades 14 im Uhrzeigersinn abgestoppt. Da die Gurtrolle 11 sich aber bei fortgesetztem Auszug des Gurtes 12 noch weiter dreht, erfolgt aufgrund der Relativdrehbewegung zwischen dem Sperrklinkenmechanismus 32 und dem Einsteuerzahnrad 14 eine Betätigung des Getriebes 16, welches zum Ausfahren der Haupt-Sperrklinke 17 führt, die anschließend mit einem Zahn des Haupt-Sperrzahnkranzes 18 in Eingriff tritt, worauf die weitere Auszugsbewegung des Gurtes 12 gestoppt wird.

Zwischen den von der Querachse 26 abgewandten Enden der Schenkel 20', 20'' erstreckt sich ein Zugglied 23 in Form einer Kunststoffsehne, welche den größten Öffnungswinkel des V-förmigen Federelementes 20 festlegt. Dies ist deswegen vorteilhaft, weil es sonst im Verlauf der Lebensdauer eines Kraftfahrzeuges vorkommen könnte, daß sich durch Langzeitverformungen der V-Winkel des Federelementes 20 öffnet und es auch schon ohne eine Bewegung der Masse 19 zu einem Eingriff der Sperrklinke 15 in den Außenzahnkranz des Einsteuerzahnrades 14 kommen könnte. Das Zugglied 23 soll aus einem sich auch langzeitig nicht dehnenden Material bestehen.

Außerdem verlaufen von den Endbereichen der Schenkel 20', 20'' Anschlagstege 24, 25 jeweils in Richtung des anderen Schenkels. Die freien Stirnflächen 24', 25' der beiden Anschlagstege 24, 25 enden im ungespannten Zustand in einem Abstand A, welcher so gewählt ist, daß die Einfederbewegung des Federelementes 20 auf einen für die erwünschte Geräuschdämpfung ausreichenden Wert begrenzt wird. Bevorzugt verlaufen die Stirnflächen 24', 25' relativ zur Bewegungsrichtung der Anschlagstege 24, 25 schräg, so daß beim Aneinanderstoßen der Stirnflächen 24', 25' eine gewisse Gleitbewegung zwischen den Stirnflächen 24', 25' unter weiterer federnder Verformung des Federelementes 20 erfolgt. Hierdurch wird am Schluß der Einfederbewegung eine verstärkte Dämpfung erzielt.

Aufgrund der erfindungsgemäßen Ausbildung werden Klappergeräusche stark gedämpft, die beim normalen Fahren durch Hin- und Herschwenken der beweglichen Masse 19 sowie des V-förmigen Federelementes 20 ansonsten erzeugt werden würden.

Die Stirnflächen 24', 25' sind derart schräggestellt, daß sie zumindest im wesentlichen parallel zueinander verlaufen.

### Bezugszeichenliste

- 11: Gurtrolle
- 12: Gurt
- 13: Beschleunigungssensor
- 14: Einsteuerzahnrad
- 15: Hilfs-Sperrklinke
- 16: Getriebe
- 17: Haupt-Sperrklinke
- 18: Haupt-Sperrzahnkranz
- 19: Masse
- 20: Federelement
- 20': Schenkel
- 20'': Schenkel
- 21: Steuervertiefung
- 22: Vorsprung
- 23: Zugglied
- 24: Anschlagsteg
- 24': Stirnfläche
- 25: Anschlagsteg
- 25': Stirnfläche
- 26: Querachse
- 27: Spielraum
- 28: Gurtschloß
- 29: Befestigungsstelle
- 30: Befestigungsstelle
- 31: Welle
- 32: Sperrklinkenmechanismus
- 33: Öffnung
- 34: Sperrzahn
- 35: Gehäuse

## Patentansprüche

1. Sicherheitsgurtvorrichtung mit einer vorzugsweise durch eine Feder in Aufwickelrichtung vorgespannten Gurtolle (11), auf die ein Anschnallgurt (12) mehr oder weniger weit aufgewickelt ist; wobei ein Beschleunigungssensor (13) mit beweglicher Masse (19) und von dieser beaufschlagter Hilfs-Sperrklinke (15) ein Einsteuerzahnrad (14) mit der Hilfs-Sperrklinke (15) ansteuert, welches seinerseits über ein Getriebe (16) auf eine mit der Gurtrolle (11) drehfest verbundene Haupt-Sperrklinke (17) einwirkt, damit diese beim Sperren des Einsteuerzahnrades (14) durch die Hilfs-Sperrklinke (15) in einen Haupt-Sperrzahnkranz (18) eingreift, um den weiteren Auszug des Gurtes (12) zu stoppen,
dadurch gekennzeichnet,
daß die Hilfs-Sperrklinke (15) an einem Federelement (20) ausgebildet ist, welches beim Hin- und Herbewegen der Masse (19) die gegen das Einsteuerzahnrad gerichteten Schlagbewegungen derart dämpft,
daß die hierbei auftretenden Klappergeräusche auf ein weitgehend störungsfreies Maß gedämpft werden.

2. Vorrichtung nach Anspruch 1,
dadurch gekennzeichnet,
daß das Federelement (20) zumindest zwei gegeneinander federbare Schenkel (20', 20'') aufweist, wobei einer der Schenkel (20') vorzugsweise über eine in ihr vorgesehene Steuervertiefung (21) und einen kugelkalottenartigen Vorsprung (22) der beweglichen Masse (19) beaufschlagt ist und der vom ersten Schenkel (20') am weitesten abgewandte Schenkel (20'') in seinem federnd beweglichen Endbereich die Hilfs-Sperrklinke (15) trägt.

3. Vorrichtung nach Anspruch 2,
dadurch gekennzeichnet,
daß das die Hilfs-Sperrklinke (15) tragende Federelement (20) in dem von der Hilfs-Sperrklinke (15) abgewandten Bereich um eine Querachse (16) schwenkbar am Gehäuse gelagert ist.

4. Vorrichtung nach einem der vorhergehenden Ansprüche,
dadurch gekennzeichnet,
daß die federnd gegeneinander beweglichen Schenkel (20', 20'') des Federelementes (20) einen Winkel von 20 bis 70, vorzugsweise 30 bis 60 und insbesondere etwa 45° einschließen.

5. Vorrichtung nach einem der vorhergehenden Ansprüche,
dadurch gekennzeichnet,
daß das Federelement nur zwei Schenkel (20', 20'') aufweist, die im wesentlichen die Form eines V haben.

6. Vorrichtung nach einem der vorhergehenden Ansprüche,
dadurch gekennzeichnet,
daß die gegeneinander federnden Endbereiche der Schenkel (20', 20'') des Federelementes (20) durch ein flexibles Zugglied auf einen Maximalabstand begrenzt sind.

7. Vorrichtung nach Anspruch 6,
dadurch gekennzeichnet,
daß das Zugglied eine Kunststoffsehne (23) ist.

8. Vorrichtung nach einem der vorhergehenden Ansprüche,
dadurch gekennzeichnet,
daß sich von den gegeneinander federnden Schenkeln (20', 20'') des Federelementes (20) Anschlagstege (24, 25) aufeinander.zu erstrekken und im entspannten Zustand des Federelementes (20) einen solchen Abstand (A) aufweisen, daß ein definierter Einfederweg gewährleistet ist.

9. Vorrichtung nach Anspruch 8,
dadurch gekennzeichnet,
daß die aufeinander zu weisenden Stirnflächen (24', 25') der Anschlagstege (24, 25) schräg zur Bewegungsrichtung der Anschlagstege (24, 25) beim Einfedern des Federelementes (20) verlaufen, derart, daß die Relativ-Einfederbewegung der Schenkel (20', 20'') beim Berühren der Stirnflächen (24', 25') nicht schlagartig sondern gedämpft abgebremst wird.

10. Vorrichtung nach Anspruch 8,
dadurch gekennzeichnet,
daß der Winkel der Stirnflächen (24', 25') relativ zur Bewegungsrichtung der Anschlagstege (24, 25) 30 bis 60° und insbesondere etwa 45° beträgt.
